Europäisches Patentamt

European Patent Office

Office européen des brevets

(19)

(11) Veröffentlichungsnummer: **0 304 583 B1**

(12) **EUROPÄISCHE PATENTSCHRIFT**

(45) Veröffentlichungstag der Patentschrift:
13.03.91 Patentblatt 91/11

(51) Int. Cl.⁵: **E05F 11/38, B60J 1/17**

(21) Anmeldenummer: 88110200.8

(22) Anmeldetag: 27.06.88

(54) Bowdenzug-Fensterheber.

(30) Priorität: 14.08.87 DE 3727153

(43) Veröffentlichungstag der Anmeldung:
01.03.89 Patentblatt 89/09

(45) Bekanntmachung des Hinweises auf die
Patenterteilung:
13.03.91 Patentblatt 91/11

(84) Benannte Vertragsstaaten:
DE ES FR GB IT NL SE

(56) Entgegenhaltungen:
EP-A- 0 164 695
DE-B- 1 580 008
FR-A- 2 123 650

(73) Patentinhaber: KÜSTER & Co. GmbH
Postfach 1157
W-6332 Ehringshausen (DE)

(72) Erfinder: Brauer, Gerhard
Pestalozzi-Strasse 38
W-6336 Solms-Oberbiel (DE)

**Beschreibung**

Die Erfindung betrifft einen Bowdenzug-Fensterheber mit zwei Führungsschienen, insbesondere für Kraftfahrzeuge, wie er z.B. in Fig. 1 der DE-OS 32 43 123 dargestellt ist.

Bei Fensterhebern der genannten Art wird die zu bewegende Fensterscheibe an jeder der beiden Führungsschienen geführt. Dabei wird die Fensterscheibe in Mitnehmern gehalten, die ihrerseits an den Führungsschienen in zweckentsprechenden U-Profilen oder dgl. gleiten. An den Mitnehmern greift der Bowdenzug an, der von einer Seiltrommel mit kurbel bewegt wird und dabei die Fensterscheibe anhebt bzw. absenkt.

Die beiden Führungsschienen sind in der Fahrzeugtür getrennt montiert und sollten im Idealfall völlig parallel zueinander ausgerichtet sein. Dies zu erreichen ist jedoch nur in den seltensten Fällen möglich, weil sowohl die Anschraublöcher in den Führungsschienen selbst als auch die korrespondierenden Löcher in der Fahrzeugtür in ihrer Lage Fertigungstoleranzen unterliegen. Das hat zur Folge, daß in der Praxis diese Führungsschienen unparallel zueinander verlaufen. Dadurch kann es dazu kommen, daß die an den Schienen geführte Fensterscheibe beim Verschieben klemmt.

Aus der EP-A-0 164 695 ist bereits ein Fensterheber der im Obergriff des Patentanspruchs angegebenen Art bekannt, bei dem die Fensterscheibe an der Mitnehmerplatte an der einen Führungsschiene über ein vertikales Langloch in der Mitnehmerplatte verbünden ist, während sie an der Mitnehmerplatte an der anderen Führungsschiene über zwei horizontale Langlöcher verbunden ist. Der vorbekannte Fensterheber enthält daher bereits Justiermittel zur Höhenverstellung des einen Fernsterschaibenendes sowie Justiermittel, die ein Verschieben der Fersterscheibe in der Ebene der Mitnehmer platten ermöglichen.

Es ist allerdings ein Nachteil der bekannten Vorrichtung, daß die Justiermittel zur Höhenverstellung lediglich aus einem Langloch und einer Feststellmutter bestehen. Eine Verstellung ist daher nur dadurch möglich, daß das Langloch bei gelöster Mutter manuell auf der Schraube verschoben wird.

Der Erfindung liegt die Aufgabe zugrunde, einen Fenster heber der genannten Art zu schaffen, der diese Nachteile überwindet und auch bei nichtparallelen Führungsschienen ein einwandfreies Verschieben der Fensterscheibe gestattet.

Diese Aufgabe ist durch einen Fensterheber gelöst, der die in dem Patentanspruch angegebenen Merkmale aufweist.

Dabei wird an mindestens einem der Mitnehmer zur Höhenjustierung der einen Fensterscheibenecke einen Exzenterbolzen angeordnet, mit dem die Schieflage der Scheibe ausgeglichen werden kann und gleichzeitig ein Langloch vorgesehen, in dem dieser Exzenterbolzen seitlich gleiten kann.

Diese Einzelheiten sind in der Zeichnung in einen Ausführungsbeispiel dargestellt. Es zeigen :

Fig. 1 eine Ansicht eines Fensterhebers mit den erfindungsgemäßen Justiermitteln,

Fig. 2 eine vergrößerte Darstellung des Bereiches A der Fig. 1,

Fig. 3 einen Querschnitt durch Fig. 2 in Höhe III-III der Fig. 2 in einer ersten Justierstellung,

Fig. 4 einen Querschnitt durch Fig. 2 in Höhe III-III der Fig. 2 in einer zweiten Justierstellung.

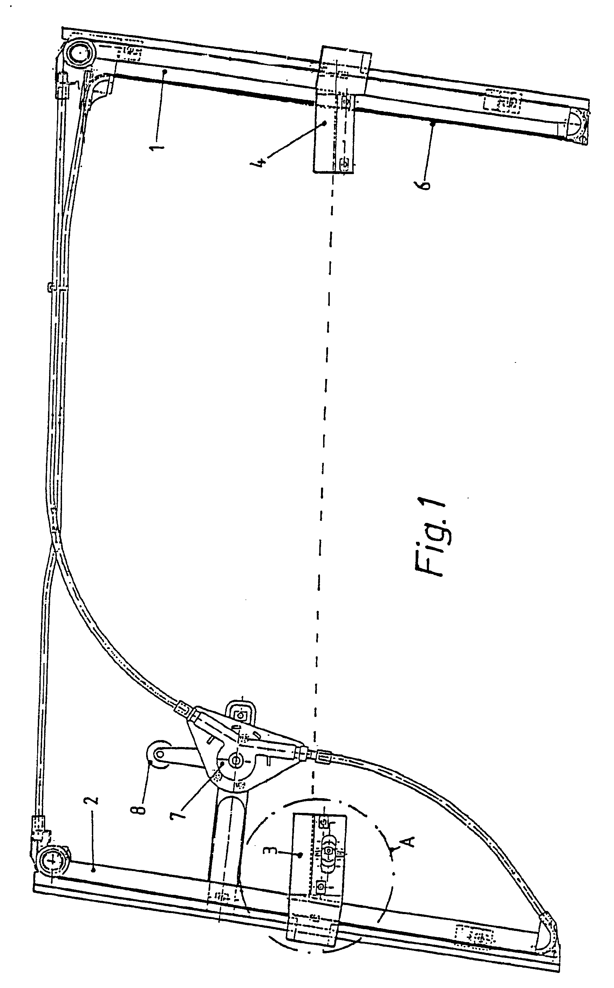

In Fig. 1 sind mit 1 und 2 die Führungsschienen bezeichnet. An ihnen gleitet die eine Mitnehmerplatte 3 bzw. 4, die beide gemeinsam die Fensterscheibe 5 tragen, von der in Fig. 1 nur der untere Rand gestrichelt angedeutet ist.

An den Mitnehmerplatten 3 und 4 greift das Seil eines Bowdenzuges 6 an, der in bekannter Weise bei 7 um eine Trommel gewickelt ist, die von einer Kurbel 8 gedreht werden kann. Zwischen den Führungsschienen 1 und 2 ist der Bowdenzug über Kreuz geführt. Wenn die nicht gezeigte Trommel gedreht wird, gleiten daher beide Mitnehmerplatten 3 und 4 in der gleichen Richtung und heben bzw. senken dabei die Scheibe.

Wie bereits ausgeführt, ergäben sich dabei keinerlei Probleme, wenn die Führungsschienen 1 und 2 immer exakt parallel ausgerichtet wären. Da dies aber kaum jemals der Fall ist, würde die Scheibe beim Verschieben klemmen, und dieses Klemmen wird durch die erfindungsgemäßen Justiermittel vermieten. Diese Justiermittel müssen mindestens an einer Mitnehmerplatte angebracht sein und sowohl eine Höhenverstellung der von dieser Mitnehmerplatte getragenen Fensterscheibenecke (=Kippung der Scheibe in ihrer Ebene) als auch eine seitliche Verschiebung der gesamten Fensterscheibe während der Aufwärts- bzw. Abwärtsbewegung ermöglichen.

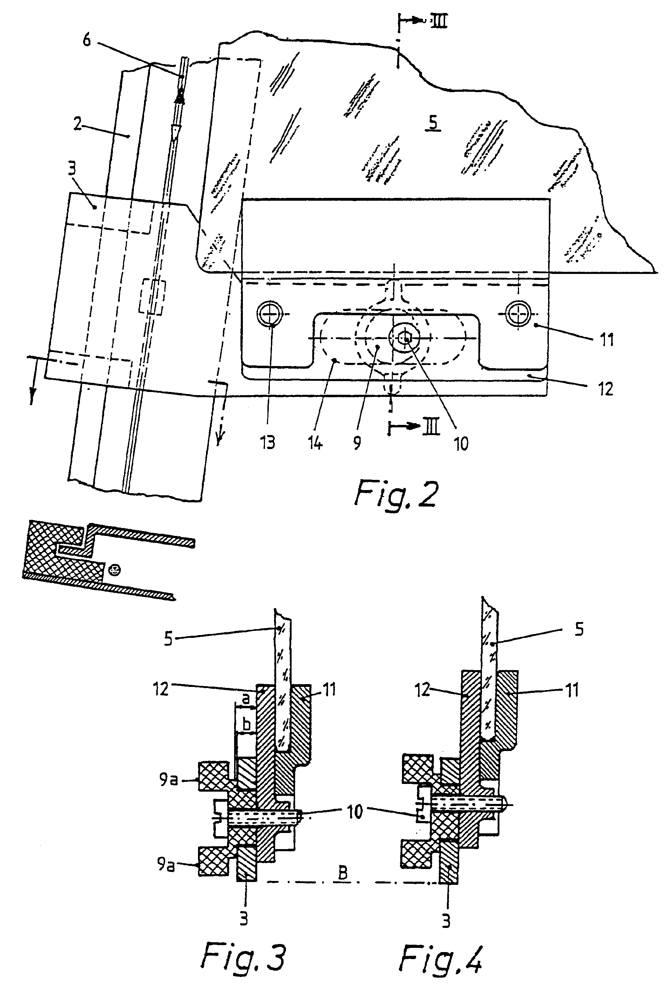

Im vorliegenden Ausführungsbeispiel sind diese Justiermittel an der in der Fig. 1 auf der linken Seite gezeigten Mitnehmerplatte 3 dargestellt. Diese Einzelheit A aus Fig. 1 ist in den Fig. 2, 3 und 4 in vergrößerter Ansicht gezeigt.

In Fig. 2 erkennt man ein Stück der Führungsschiene 2, an der mittels des Bowdenzuges 5 die Mitnehmerplatte 3 geführt ist. Letztere trägt über einen Exzenterbolzen 9 und eine Feststellschraube 10 zwei Halteplatten 11, 12, zwischen denen die Fensterscheibe 5 gehalten ist. Diese Halteplatten 11, 12 sind mittels Schrauben, Nieten 13 oder dgl. (Fig. 2) fest miteinander verbunden und stellen somit quasi ein einziges Funktionsteil dar, das durch die Justiermittel aber relativ zur Mitnehmerplatte 3 sowohl in der Höhe als auch seitlich verschiebbar ist.

Für die Höhenverschiebung besteht das Justiermittel aus dem exzentrischen Teil des Bolzens 9, für die seitliche Verschiebung besteht das Justiermittel aus einem Langloch 14, das in der Mitnehmerplatte 3 angebracht ist (Fig. 2).

Die vorhandenen Teile arbeiten wie folgt zusammen :

Zunächst wird die Fensterscheibe 5 mit ihren Halteplatten 11, 12 an die Mitnehmerplatte 3 angesetzt und durch die Feststellschraube 10 lose gehalten, die in ein Gewinde in der Platte 12 eingeschraubt wird. Danach wird durch Drehen des Exzenterbolzens 9 an dessen Flügeln 9a die Höhe dieser Fensterscheibenecke derart einjustiert, daß die Fensterscheibe 5 z.B. mit ihrer Unterkante waagerecht steht. In dieser Stellung wird die Schraube 10 festgezogen, womit die Höhenjustierung beendet ist. Durch die Breite der Fensterscheibe kippt die Scheibe dabei in der anderen Mitnehmerplatte 4 nur unwesentlich, was durch das Spiel der Mitnehmerplatte 4 an der Führungsschiene 1 ausgeglichen wird.

Der seitliche Ausgleich, der erforderlich ist, um beim Anheben bzw. Absenken der Scheibe 5 bei nichtparallelen Führungsschienen 1 und 2 jegliches Klemmen zu verhindern, erfolgt durch Gleiten des Exzenterbolzens 9 im Langloch 14. Voraussetzung dafür ist, daß der exzentrische Teil des Bolzens 9 geringfügig dicker ist, als die Blechstärke der Mitnehmerplatte 3. In Fig. 3 ist dies angedeutet durch die Maße a und b, und es gilt a > b.

Fig.3 stellt den direkten Schnit durch die Fig. 2 in Höhe III-III dar und zeigt den Exzenterbolzen 9 in Mittelstellung. Im Vergleich dazu ist in Fig. 4 der Exzenterbolzen in seine eine Extremstellung gedreht dargestellt. Aus der Nebeneinanderstellung beider Figuren ist deutlich zu erkennen, daß sich an der Stellung der Mitnehmerplatte 3 nichts geändert hat. Sie hat in beiden Figuren die gleiche Höhenlage, was durch die Linie B angedeutet ist. Geändert hat sich dagegen die Höhenstellung der Platten 11 ; 12 mit der Fensterscheibe 5. Diese ist nach oben verschoben, und zwar um den halben Wert der Exzentrizität des Bolzens 9.

Wird die Fensterscheibe über ihren gesamten Verstellweg angehoben bzw. abgesenkt, und verlaufen die Führungsschienen 1 und 2 nicht parallel zueinander, so wird die an der Mitnehmerplatte 4 befestigte Scheibenseite in Richtung ihrer Führungsschiene verschoben, denn mit dieser Schiene ist die Fensterscheibe gleitend fest verbunden. Die andere Scheibenseite bewegt sich dabei aber relativ zur anderen Mitnehmerplatte 3, und zwar quer zur Verschieberichtung der Scheibe.

Dies wird ermöglicht durch das Langloch 14, das entsprechend lang bemessen ist.

## Ansprüche

1. Bowdenzug-Fensterheber zum Verschieben einer Fensterscheibe (5) in einem Kraftfahrzeug oder dgl. mit zwei Führungsschienen (1 ; 2), an denen die Fensterscheibe (5) mittels je einer Mitnehmerplatte (3 ; 4) gehalten ist, die ihrerseits an den Führungsschiene formschküssig gleitend geführt sind, und an denen der die Fensterscheibe bewegende Bowdenzug (6) angreift, wobei mindestens eine der beiden Mitnehmerplatten (3 ; 4) sowohl mit Justiermitteln zur Höhenverstellung des an ihr befestigten Fensterscheibenendes als auch mit solchen Justiermitteln versehen ist, die eine seitliche Verschiebung der gesamten Fensterscheibe in der Ebene der Mitnehmerplatten bzw. der diese führenden Führungsschienen ermöglichen, dadurch gekennzeichnet, daß das Justiermittel zur Höhenverstellung ein Exzenterbolzen (9) ist, der einstellbar und feststellbar an der an einen Führungsschiene (2) gleitenden Mitnehmerplatte (3) angeordnet ist und mittels Halteplatten (11; 12) die Fensterscheibe (5) trägt, und daß das Justiermittel zur seitlichen Verschiebung der Fensterscheibe (5) aus einem im wesentlich senkrecht zur Verschieberichtung der Fensterscheibe (5) verlaufenden Langloch (14) in der Mitnehmerplatte (3) besteht, in dem der Exzenterbolzen (9) seitlich gleiten kann.

## Claims

1. Bowden cable window lifter for displacing a window pane (5) in a motor vehicle or the like with two guide rails (1 ; 2), at which the window pane (5) is retained by means of a respective entraining plate (3; 4), which are in their turn slidingly and shaped-lockingly guided at the guide rails and at which the Bowden cable (6) moving the window pane engages, wherein at least one of both the entraining plates (3 ; 4) is provided with adjusting means for the height adjustment of the window pane end fastened to it as well as also with such adjusting means as enable a lateral displacement of the entire window pane in the plane of the entraining plates or of the guide rails guiding these, characterised thereby, that the adjusting means for the height adjustment is an eccentric pin (9), which is adjustably and fixably arranged at the entraining plate (3) sliding at the one guide rail and carries the window pane (5) by means of retaining plates (11 ; 12), and that the adjusting means for the lateral displacement of the window pane (5) consists of an elongate hole (14), which extends substantially perpendicular to the direction of displacement of the window pane (5) and in which the eccentric pin (9) can slide laterally, in the entraining plate (3).

## Revendications

1. Lève-glace à câble Bowden pour déplacer une glace (5) d'un véhicule automobile ou analogue ayant deux glissières de guidage (1, 2) dans chacune desquelles la glace (5) est retenue au moyen d'une pla-

**EP 0 304 583 B1**

que d'entraînement (3, 4), ces plaques pouvant elles-mêmes coulisser, grâce à leur forme appropriée, dans les glissières de guidage, et comportant le point d'ancrage du câble Bowden (6) qui provoque le mouvement de la glace, l'une au moins desdites plaques d'entraînement (3, 4) étant pourvue de moyens d'ajustage pour le réglage en hauteur du bord de la glace qui prend appui contre elle, ainsi que des moyens d'ajustage tels qu'ils permettent un déplacement latéral de l'ensemble de la glace dans le plan de la plaque d'entraînement ou dans le plan desdites glissières de guidage, caractérisé en ce que les moyens d'ajustage pour le réglage en hauteur sont constitués par un goujon à excentrique (9) qui est disposé de manière à pouvoir être réglé et bloqué sur la plaque d'entraînement (3) coulissant sur l'une des glissières de guidage (2) et qui porte la glace (5) au moyen de plaques de retenue (11, 12), et en ce que les moyens d'ajustage pour le déplacement latéral de la glace (5) sont constitués par un trou oblong (14) ménagé dans la plaque d'entraînement (3) et s'étendant sensiblement perpendiculairement à la direction du déplacement de la glace (5), trou dans lequel le goujon à excentrique (9) peut coulisser latéralement.

Fig. 1

Fig. 2

Fig. 3

Fig. 4